# EUROPEAN PATENT APPLICATION

(11) **EP 4 850 891 A1**
(43) Date of publication of application: **09.12.2026**
(21) Application number: 25216418.1
(22) Date of filing: 17.11.2025
(51) Int. Cl.: B29C 64/118, B29C 64/245, B33Y 30/00, B33Y 40/00

(54) **A THREE-DIMENSIONAL PRINTING SYSTEM**

(30) Priority: 02.06.2025 IN 202541053412
(71) Applicant: L & T Technology Services Limited, Chennai 600089 (IN)
(72) Inventor: VARADHARAJAN, LAKSHMINARAYANAN, 600012 Chennai (IN); KUMARASAMY, GOWRISHANKAR, 638154 Erode (IN); DHARMALINGAM, NAVEEN, 639117 Karur (IN); BABULAL, RIYAZ, 624401 Dindigul (IN)
(74) Representative: Beck Greener LLP

(57) **Abstract**

A three-dimensional (3D) printing system is disclosed. The system (200) comprises a print bed (202) that provides a surface for fabricating a 3D object. A frame (204) is operatively coupled to the print bed and supports and controls the movement of a printer head (206), which selectively deposits 3D printing material. A slicing unit (100) is mounted on the frame (204) to receive and place filler material (10) onto the print bed as a support structure. The slicing unit (100) includes a housing (20) with a receiving end (20a) and a deposition end (20b). A feeding unit (30) within the housing (20) moves the filler material between the receiving and deposition ends. A cutting unit (40) is located near the deposition end and slices the filler material into predetermined dimensions based on support structure parameters. A control unit (50) is communicatively coupled to the frame, printer head, and slicing unit, and is configured to coordinate their movement and operation during fabrication.

## Description

Present disclosure relates to a field of an additive manufacturing. More particularly, aspects of the present disclosure relate to a three-dimensional printing system comprising a slicer unit for building support structures.

Conventionally, a three-dimensional (3D) printing, also referred to as additive manufacturing, is a technology used to build three-dimensional objects by adding material layer by layer based on digital models. Typically, 3D printers comprise components such as a base platform, support structures, stepper motors, stud rods, motor belts, extrusion systems, and material feed units. Further, there exists different printing technologies, such as fused deposition modelling (FDM), selective laser sintering (SLS), stereolithography (SLA) etc. Depending on the printing technology, these 3D printers use materials like thermoplastic filaments, resin, powdered metals, or even concrete. One of the commonly used method is fused deposition modeling (FDM), where thermoplastic filament is melted and extruded through a nozzle to form an object layer by layer. While FDM is just one example, the fundamental principles and structural challenges apply to most 3D printing systems.

Usually, across all 3D printing technologies there is the need for support structures during the fabrication of main 3D object. The main object may have any required shape, material, size, contour and complex geometries configurations. Also to print objects with overhangs, cavities, or bridging features, support materials or structures must be added beneath or around the main object to maintain structural integrity during the 3D printing process. Conventionally, these support structure/ material are automatically generated and printed inline using the same or similar type of material as the main object using the extruder system of the 3D printer. While printing support structure for the main object is sometimes necessary, however this introduces several limitations. of the recurring challenges

The 3D printing of support structures leads to increased printing time and material consumption. Since the printer uses the same feedstock in the material feed units and extruder system to build both the main object and the support structures, thereby a significant portion of the material consumes on temporary support structures that are generally discarded once the main 3D object is printed. Further, printing and generation of the support structure increases an overall build time. This contributes to increased production costs, especially when expensive or specialty materials are used for printing. The printer must carefully lay down the support structures along with the main object, which often increases a total printing duration depending on the design and structural complexity. This delay leads to increase in production time. Therefore, there exists a need to develop an improved three-dimensional printing system which minimizes aids in minimizing the production time and simultaneously provides support to the main objected to be printed and thereby ensuring improved functionality.

In an embodiment, a three-dimensional (3D) printing system is disclosed. The system comprises a print bed providing a surface for fabricating a 3D object. A frame is operatively coupled to the print bed and configured to support and control movement of a printer head. The printer head is adapted to selectively deposit a 3D printing material to form the 3D object on the print bed. A slicing unit is mounted to the frame and configured to receive and place a filler material on to the print bed as a support structure for fabricating the 3D object. The slicing unit comprises a housing having a receiving end for receiving the filler material and a deposition end is configured to place the filler material on to the print bed. The slicing unit also includes a feeding unit disposed within the housing. The feeding unit is configured to move the filler material between the receiving end and the deposition end. The slicing unit further comprises a cutting unit arranged within the housing and proximal to the deposition end. The cutting unit is configured to slice the filler material in to predetermined dimension based on parameters of the support structure. Further, the system includes a control unit communicatively coupled to the frame, the printer head and the slicing unit. The control unit is configured to coordinate movement and operation of the frame, the printer head and the slicing unit to fabricate the 3D object with integrated support structures.

According to an aspect of the present invention, there is provided a three-dimensional (3D) printing system, comprising: a print bed providing a surface for fabricating a 3D object; a frame, operatively coupled to the print bed, configured to support and control movement of a printer head, wherein the printer head is adapted to selectively deposit a 3D printing material to form the 3D object on the print bed; a slicing unit, mounted to the frame, configured to receive and place a filler material on to the print bed as a support structure for fabricating the 3D object, wherein the slicing unit comprises: a housing, having: a receiving end for receiving the filler material; and a deposition end, configured to place the filler material on to the print bed; a feeding unit, disposed within the housing, configured to move the filler material between the receiving end and the deposition end; a cutting unit, arranged within the housing and proximal to the deposition end, configured to slice the filler material in to predetermined dimension based on parameters of the support structure; and a control unit, communicatively coupled to the frame, the printer head and the slicing unit, configured to coordinate movement and operation of the frame, the printer head and the slicing unit to fabricate the 3D object with integrated support structures.

In an embodiment, the feeding unit comprises: at least one feeder actuator coupled to at least one feeder, wherein the feeder actuator is operatively coupled to the control unit, configured to move the filler material between the receiving end and the deposition end; at least one rolling unit to support and facilitate movement of the filler material; and at least one adjustable spring-loaded mechanism, operatively coupled to the at least one rolling unit, configured to adjust the at least one rolling unit based on variations in shape and size of the filler material.

In an embodiment, the at least one rolling unit comprises a first set of guided rollers, arranged within the plurality of slots defined on the housing; and a second set of guided rollers, arranged within the plurality of slots, wherein the second set of guided rollers is configured opposite to the first set of guided rollers, wherein each of the first set of guided rollers, and the second set of guided rollers are coupled together with the at least one adjustable spring-loaded mechanism.

In an embodiment, the cutting unit comprises: a cutting mechanism, configured to slice the filler material; and a cutting actuator, operatively coupled to the control unit, configured to actuate the cutting mechanism to slice the filler material.

In an embodiment, the feeding unit comprises at least one feeder actuator coupled to at least one feeder. The feeder actuator is operatively coupled to the control unit and configured to move the filler material between the receiving end and the deposition end. Further, at least one rolling unit is configured to support and facilitate movement of the filler material. The feeding unit includes at least one adjustable spring-loaded mechanism operatively coupled to the at least one rolling unit and configured to adjust the at least one rolling unit based on variations in shape and size of the filler material.

In an embodiment, the housing comprises a plurality of slots to receive the at least one rolling unit.

In an embodiment, the at least one rolling unit comprises a first set of guided rollers arranged within the plurality of slots. Further, a second set of guided rollers is arranged within the plurality of slots. The second set of guided rollers is configured opposite to the first set of guided rollers. Each of the first set of guided rollers and the second set of guided rollers are coupled together with the at least one adjustable spring-loaded mechanism.

In an embodiment, the cutting unit comprises a cutting mechanism configured to slice the filler material, and a cutting actuator is operatively coupled to the control unit configured to actuate the cutting mechanism to slice the filler material.

In an embodiment, the cutting mechanism comprises at least one of a cutting blade, a thermal slicer, or a laser cutter and at least one cutting tool, wherein the cutting mechanism is selected based on a type of filler material.

In an embodiment, the system comprises a material delivery unit communicatively coupled to the printer head and configured to supply the 3D printing material.

In an embodiment, the deposition end (20b) of the feeding unit and a deposition end of the printer head is aligned co-linearly to maintain alignment of the 3D printed layer.

The present disclosure further discloses a slicing unit for a three-dimensional (3D) printing system. The slicing unit comprises a housing having a receiving end for receiving a filler material and a deposition end to place the filler material on to a print bed. Further, a feeding unit is disposed within the housing and configured to move the filler material between the receiving end and the deposition end. A cutting unit is arranged within the housing at the deposition end and configured to slice the filler material in to predetermined dimension for placing the filler material on to the print bed as a support structure for fabricating a 3D object.

According to a further aspect of the present invention, there is provided a slicing unit for a three-dimensional (3D) printing system, comprising: a housing, having: a receiving end for receiving a filler material; and a deposition end, configured to place the filler material on to a print bed; a feeding unit, disposed within the housing, configured to move the filler material between the receiving end and the deposition end; a cutting unit, arranged within the housing at the deposition end, configured to slice the filler material in to predetermined dimension for placing the filler material on to the print bed as a support structure for fabricating a 3D object.

In an embodiment, the feeding unit comprises: at least one feeder actuator coupled to at least one feeder, wherein the feeder actuator is operatively coupled to the control unit, configured to move the filler material between the receiving end and the deposition end; at least one rolling unit to support and facilitate movement of the filler material; wherein the rolling unit comprises; a first set of guided rollers, arranged within the plurality of slots; and a second set of guided rollers, arranged within the plurality of slots, wherein the second set of guided rollers is configured to opposite to the first set of guided rollers, wherein each of the first set of guided rollers, and the second set of guided rollers are coupled together with the at least one adjustable spring-loaded mechanism; and at least one adjustable spring-loaded mechanism, operatively coupled to the at least one rolling unit, configured to adjust the at least one rolling unit based on variations in shape and size of the filler material.

In an embodiment, the cutting unit comprises: a cutting mechanism, configured to slice the filler material; and a cutting actuator, operatively coupled to a control unit, configured to actuate the cutting mechanism to slice the filler material.

In an embodiment, the slicing unit comprising the feeding unit includes at least one feeder actuator coupled to at least one feeder. The feeder actuator is operatively coupled to the control unit and configured to move the filler material between the receiving end and the deposition end. Further, at least one rolling unit is configured to support and facilitate movement of the filler material. The feeding unit includes at least one adjustable spring-loaded mechanism operatively coupled to the at least one rolling unit and configured to adjust the at least one rolling unit based on variations in shape and size of the filler material. The accompanying drawings, which are incorporated in and constitute a part of this disclosure, illustrate exemplary embodiments and, together with the description, serve to explain the disclosed principles.
**Figure 1** illustrates a perspective view of a three-dimensional (3D) printing system having a slicing unit, in accordance with an embodiment of the present disclosure;
**Figure 2** illustrates a sectional view of the system with the slicing unit, in accordance with an embodiment of the present disclosure;
**Figure 3** illustrates a perspective view of the slicing unit, in accordance with an embodiment of the present disclosure;
**Figure 4** illustrates a sectional view of the slicing unit, in accordance with an embodiment of the present disclosure;
**Figure 5** illustrates a block diagram of the system, in accordance with an embodiment of the present disclosure; and
**Figure 6** illustrates an exploded view of the slicing unit having an embodiment of a feeding unit and a cutting unit, in accordance with an embodiment of the present disclosure.

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims. Additional illustrative embodiments are listed.

It is to be noted that a person skilled in the art would be motivated from the present disclosure and modify construction of the three-dimensional printing system. However, such modifications should be construed within the scope of the present disclosure. Accordingly, the drawings show only those specific details that are pertinent to understand the embodiments of the present disclosure, so as not to obscure the disclosure with details that will be readily apparent to those of ordinary skill in the art having benefit of the description herein. The terms "comprise," "comprising," or any other variations thereof used in the disclosure, are intended to cover a non-exclusive inclusion, such that a system and method that comprises a list of components does not include only those components but may include other components not expressly listed or inherent to such system, method, or assembly, or device. In other words, one or more elements in a system or device proceeded by "comprises... a" does not, without more constraints, preclude the existence of other elements or additional elements in the system or device.

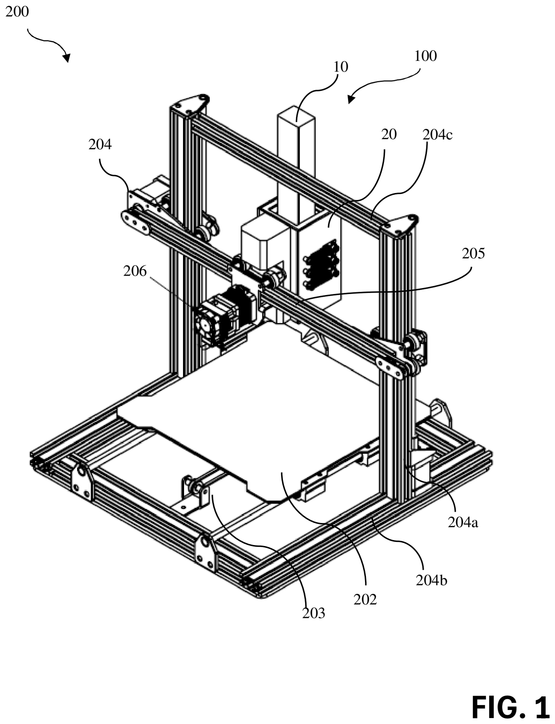

The following paragraphs describe the present disclosure with reference to Figures.1 to Figures 6. In the figures, the same element or elements which have similar functions are indicated by the same reference signs.

The following detailed description is merely exemplary in nature and is not intended to limit application and uses. Furthermore, there is no intention to be bound by any theory presented in the preceding background or summary or the following detailed description. It is to be understood that the disclosure may assume various alternative orientations and step sequences, except where expressly specified to the contrary. It is also to be understood that the specific devices or components illustrated in the attached drawings and described in the following specification are simply exemplary embodiments of the inventive concepts defined in the appended claims. Hence, specific dimensions or other physical characteristics relating to the embodiments that may be disclosed are not to be considered as limiting, unless the claims expressly state otherwise. Hereinafter, preferred embodiments of the present disclosure will be described referring to the accompanying drawings. While some specific terms of "upper," "lower," "below," "above," "right," "left," "rear" or "front" and other terms containing these specific terms and directed to a specific direction will be used, the purpose of usage of these terms or words is merely to facilitate understanding of the present invention referring to the drawings. Accordingly, it should be noted that the meanings of these terms or words should not improperly limit the technical scope of the present invention. Also, it is to be understood that the phraseology and terminology used herein is for description and should not be regarded as limiting. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings. It is to be understood that this disclosure is not limited to the specific devices, methods, applications, conditions, or parameters described and/or shown herein and that the terminology used herein is to describe particular embodiments by way of example and is not intended to be limiting of the claimed invention. Hereinafter in the following description, various embodiments will be described. For purposes of explanation, specific configurations and details are outlined to provide a thorough understanding of the embodiments. However, it will also be apparent to one skilled in the art that the embodiments may be practiced without the specific details. Furthermore, well-known features may be omitted or simplified in order not to obscure the embodiment being described.

Referring to Figures 1 to 6 in conjunction, which illustrates various views of the three-dimensional (3D) printing system (200) [alternatively referred as the "system (200)"] having a slicing unit (100) and various components associated with the system (200). The system (200) of the present disclosure may be used in different types of additive manufacturing and three-dimensional printing. Also, application of the system (200) elucidated going forward should not be construed as a limitation of the present disclosure. This integration of the slicing unit reduces printing and production time. Advantageously, this increases an output and the operational efficiency of the system (200). Also, the configuration of the slicing unit (100) provides improved customized support structures with optimized material usage. This enables improved stability for overhangs and complex geometries while minimizing additional use of printing material. Hereinafter, features of the system (200) with integrated the slicing unit (100) along with its working may be elucidated.

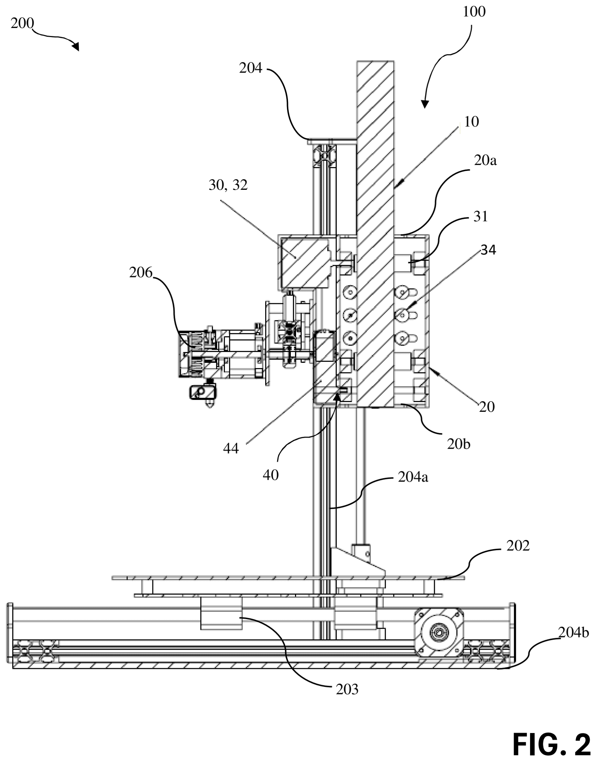

Referring to Figure 1 and 2, the system (200) comprises a print bed (202) providing a surface for fabricating a 3D object. The system (200) may be configured to fabricate any type of 3D objects by depositing material layer by layer on the print bed (202), adapting a digital model. The print bed (202) provides a surface as a foundation for building the 3D object. The print bed (202) may be a flat, rigid platform to provide stability and dimensional accuracy throughout the printing process of the 3D object. In an embodiment, the print bed (202) may be manufactured at least one of metal, metal alloy and glass etc. In an embodiment, the print bed (202) may be configured with a heating element. The heating of the print bed (202) by the heating element aids in improving adhesion of a first layer of 3D object to be fabricated and may further minimize warping or delamination during the fabrication. However, providing the heating element to print bed (202) shall not be construed as a limitation. In another embodiment, the print bed (202) may move or be stationary based on the application requirement of fabricating the 3D object. To provide movement to the print bed (202), the print bed (202) may be mounted on a displacement mechanism (203). In an embodiment, the displacement mechanism (203) may be at least one guideways or linear rails coupled to a bottom portion of the print bed (202) to move the print bed (202) along at least one axes, based on the application requirement. This movement of the print bed (202) allows for precise control for each printing layer, height and facilitates fabricating complex 3D objects. In an embodiment, the actuation of the displacement mechanism (203) for the movement of the print bed (202) may be operated by an actuator [not specifically shown in Figures]. This activation of the displacement mechanism (203) ensures accurate and consistent movement and positioning of the print bed (202) as each layer is printed.

The system (200) comprises a frame (204) operatively coupled to the print bed (202) as seen in Figure 1 and Figure 2. The frame (204) is configured to support the print bed (202). The frame (204) may comprise a pair of columns (204a) extending upwardly from a base (204b). The base (204b) is configured to movably support the pair of columns (204a). Each column of the pair of columns (204a) may comprise a bottom portion and a top portion. The bottom portion may be movably connected to the base (204b) and the top portion of each column is coupled to each other by a connecting member (204c). In an embodiment, the base (204b) is structured to provide a foundation to the print bed (202) and the securely support the displacement mechanism (203). The frame (204) is further configured to support and control movement of a printer head (206).

The frame (204) may further include a moving gantry (205) coupled to the frame (204). More specifically, each connecting end of the moving gantry (205) is movably coupled to each column of the pair of columns (204a). In an embodiment, the printer head (206) is mounted to moving gantry (205) of the frame (204). This moving gantry (205) may be coupled to the frame (204) by at least one of motion systems and guideways, such that the surface of the base (204b), the pair of columns (204a) and the movable gantry (205) are configured as tracks or paths along which the printer head (206) may move. These motion systems enable precise motion along the X, Y, and Z axes, based on the 3D objected to be fabricated. The printer head (206) mounted on the moving gantry (205) may move along the guideways, actuated by at least one actuators such as motors, stepper motors and the like. The printer head (206) is adapted to selectively deposit a 3D printing material to form the 3D object on the print bed (202). The 3D printing material may be at least one a thermoplastic filament, resin, or powder form for printing onto the print bed (202) to build the 3D object layer by layer. For example, in a fused deposition modelling (FDM) printer, the printer head (206) may include a heated nozzle which melts a filament before extruding onto the print bed (202). The precise movement of the printer head (206) along frame (204) via the moving gantry (205) and the guideways ensures that each layer of printing material is deposited with accuracy, following a contour, size and shape of the digital model.

Therefore, depending on the 3D object design, a movement of the printer head (206) may occur in at least one of the axes (the X and Y directions for horizontal plane) while the print bed (202) may move in another direction (the Z direction). Alternatively, the printer head (206) may move in all three directions, with the print bed (202) remaining stationary based on factors such as an intended print size, resolution, and application requirements. Further, the system (200) comprises a material delivery unit [not shown in Figures] communicatively coupled to the printer head (206). The material delivery unit is configured to supply the 3D printing material to the printer head (206) for fabricating the 3D object.

The system (200) further comprises a slicing unit (100) mounted to the frame (204). More specifically, the slicing unit (100) is integrated to the system (200) and mounted to the moving gantry (205) and in conjunction with the printer head (206) as best in in Figures 1 and 2. The slicing unit (100) is configured to receive and place a filler material (10) on to the print bed (202) as a support structure for fabricating the 3D object. The slicing unit (100) comprises a housing (20) having a receiving end (20a) and a deposition end (20b). The receiving end (20a) is configured for receiving the filler material (10) and the deposition end (20b) is configured to receive and place a filler material (10) on to the print bed (202) as the support structure for fabricating the 3D object. The housing (20) may be structured as a protective and structural enclosure to integrate all internal mechanisms and components essential for handling and deposition of the filler material (10) as the support structure. The receiving end (20a) may be configured as an entry portion to facilitate smooth introduction and alignment of the filler material (10). In an embodiment, the deposition end (20b) is aligned with the receiving end (20a) for precision exit of the filler material (10). The housing (20) may be a hollow structure wherein an opening of the receiving end and an opening at the deposition end (20b) are aligned with each other to allow entry and exit of the filler material (10). In an embodiment, the support structure may be a 3D object or a non- 3D object.

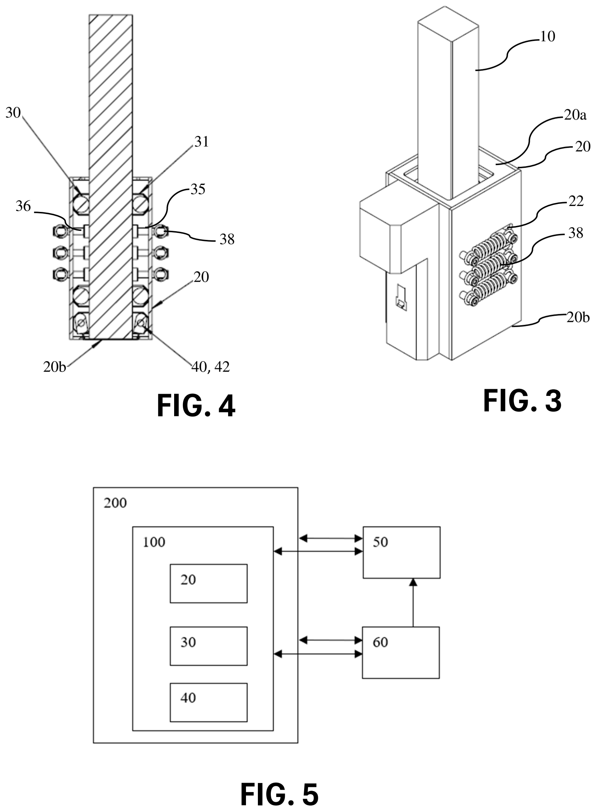

Further referring to Figure 3 to 5 in conjunction with Figures 1 to 2, the slicing unit (100) comprises a feeding unit (30) disposed within the housing (20). The feeding unit (30) is configured to move the filler material (10) between the receiving end (20a) and the deposition end (20b). The feeding unit (30) comprises at least one feeder actuator (32) coupled to at least one feeder (31). The feeder (31) may be proximal to the receiving end (20) within the housing (20). However, this configuration of the feeder (31) shall not be construed as a limitation as any number of feeder (31) may be provided within the housing (20) to facilitate movement of the filler material (10). The feeder (31) aids in exerting a tractional force on the filler material (10) to move towards the deposition end (20b). In an embodiment, the feeder (31) may include one or more drive rollers each rotatably mounted on a shaft [not shown in Figures]. The drive rollers may be mounted at a periphery of an inner surface of the housing (20) such that the driver rollers abut at least one side surface of the filler material (10) passing therethrough, to grip and transport the filler material (10). Further a portion of the shaft is operatively coupled with the at least one feeder actuator (32) to rotate the shaft, thereby rotating the one or more drive rollers. The feeder actuator (32) may be a motor, stepper motor, a closed-loop servo motor and the like. To accommodate a different dimension of the filler material (10), the feeder actuator (32) can drive either a single-side feeder roller (with the other roller idling) or a co-rotating dual-actuator configuration for symmetric gripping of filler material (10).

In an embodiment, the feeder (31) with drive roller may be made from at least one of nitrile rubber or knurled stainless steel. The type of the feeder (31) is selected for resistance to slippage and wear of the filler material (10). More particularly, the drive rollers may be coated with nitrile rubber or polyurethane to enhance surface friction and reduce slippage. Further, for longer duration applications, the drive rollers may be knurled or textured stainless-steel cylinders, which grip slightly irregular or composite filler material (10). Furthermore, the drive rollers may be structured to have provisions such as spikes, needles and defined with protruding structures of required size and shape based on the application requirements and type of the filler material (10) used.

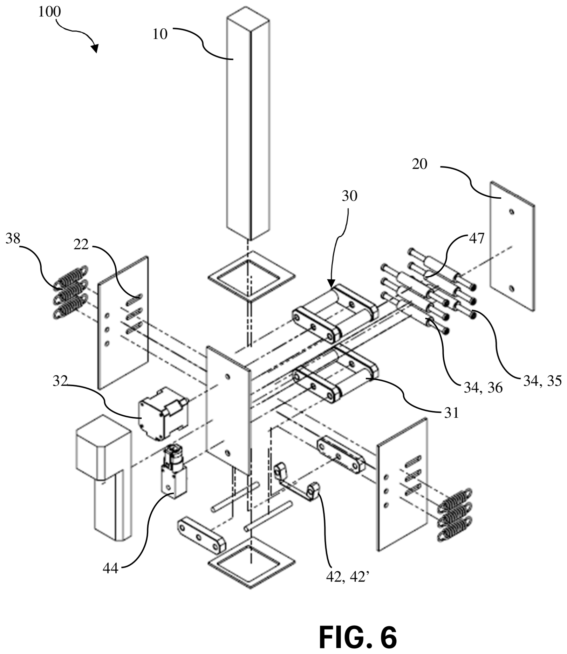

The feeding unit (30) further comprises at least one rolling unit (34) to support and facilitate movement of the filler material (10). The at least one rolling unit (34) may be guiding rollers, to support displacement of the filler material (10) throughout within the housing (20). Each guide roller is mounted on a rotational shaft supported by at least one journal bearing for precision and longevity. In an embodiment, at least one rolling unit (34) comprises a first set of guided rollers (35) and a second set of guided rollers (36). The second set of guided rollers (36) is configured opposite to the first set of guided rollers (35). The at least one rolling unit (34) may be arranged axially to the feeder (31). Further, the housing (20) comprises a plurality of slots (22) to receive the at least one rolling unit (34). More specifically, each of the first set of guided rollers (35) and second set of guided rollers (36) are elongated members defined with two opposing ends, such that one end is arranged within a plurality of slots (22) defined at one side surface of the housing (20) and the other end of first set of guided rollers (35) and second set of guided rollers (36) is arranged to be received within a plurality of slots (22) defined at opposing side surface of the housing (20) as seen in Figure 6. In an embodiment, each slot of the plurality of slots (22) is defined in parallel to each other. Further, plurality of slots (22) are vertically stacked and allow adjustable placement of each first set and second set of guide roller pair (35,36) to support the fillers material's (10) geometry. The first set and second set of guide rollers (35,36) configured opposite to each other facilitates a dual-roller configuration, thereby applying equal lateral force to the filler material (10) to provide an auxiliary support while traversing. The feeding unit (30) also comprises at least one adjustable spring-loaded mechanism (38), operatively coupled to the at least one rolling unit (34). The adjustable spring-loaded mechanism (38) is configured to adjust the at least one rolling unit (34) based on variations in shape and size of the filler material (10). These first set and second set of guide rollers (35,36) are installed within elongated plurality of slots (22) on both sides of the housing (10), allowing them to slide laterally. This slot-based mounting system permits each first set and second set of guide rollers (35,36) to adjust their position based on a cross-sectional dimensions of the filler material (10), thereby supporting dynamic alignment during operation. In an embodiment, the deposition end (20b) of the slicing unit (100) and a deposition end of the printer head (206) is aligned to be co-linear to maintain alignment and structural integrity of the 3D printed layer.

Referring to Figure 3 and Figure 6, each of the first set and second set of guide rollers (35,36) are coupled together with the at least one adjustable spring-loaded mechanism (38). More specifically, each of the first set and second set of guide rollers (35,36) is biased inwardly using a spring-loaded mechanism (38). The spring-loaded mechanisms (38), comprises at least one of coil compression springs or torsion springs, are anchored between each ends of first set and second set of guide rollers (35,36) and the housing (20). These loaded mechanism (38) exert a constant inward forces, keeping the first set and second set of guide rollers (35,36) in contact with the filler material (10). Further, each spring mechanism (38) is attached to an adjustable tensioning component, such as a knurled knob or a threaded screw, which allows prices control over the pressure applied by the first set and second set of guide rollers (35,36). This customization enables the slicing unit (100) to accommodate materials of varying stiffness and size without requiring structural changes to the system (200).

Further, when the filler material (10) is fed into the receiving end (20a) of the housing (20), the filler material (10) may interact with the the first set and second set of guide rollers (35,36) assemblies. In an operative configuration, if the filler material (10) is wider than the preset spacing between the first set and second set of guide rollers (35,36) rollers, this will cause the first set and second set of guide rollers (35,36) to slide outward within the plurality slots (22) that are vertically stacked. This displacement is resisted and balanced by the spring-loaded mechanisms (38), which absorbs the deviation and maintains controlled contact with the filler material (10). Once the wider section passes, the first set and second set of guide rollers (35,36) are biased back into position by the spring-loaded mechanism (38), resuming their default alignment and contact pressure. This dynamic response allows the the first set and second set of guide rollers (35,36) to adapt to irregularities in cross-section of the filler material (10) while minimizing a risk of skewing, wobbling, or damaging to the filler material (10). Furthermore, the adjustability of the spring tension allows operators to tailor the pressure of rolling unit (34) based on the type of filler material (10) being used. In case of handling rigid rods or flexible filaments type of filler material (10), the rolling unit (34) ensures that the material remains centered along an axis of the housing (20), which is crucial for accurate deposition at the deposition end (20b). This rolling unit (34) and along with spring loaded mechanism (38) improves a quality and reliability of the printing process but also enhances the modularity and maintainability of the slicing unit (100) by allowing adjustments and easy access to rollers for maintenance or replacement.

The slicing unit (100) also comprises a cutting unit (40), arranged within the housing (20) at the deposition end (20b). The cutting unit (40) is configured to slice the filler material (10) in to predetermined dimension for placing the filler material (10) on to the print bed (202) as a support structure for fabricating a 3D object. The cutting unit (40) comprises a cutting mechanism (42) provided at the deposition end (20b) of the housing (20). The cutting mechanism (42) may be provided proximal to the deposition end (20b) and just before the filler material (10) is to be sliced before placing the filler material (10) on the print bed (202). In an embodiment, the cutting mechanism (42) comprises at least one of a cutting blade (42'), a thermal slicer [not shown in Figures] or a laser cutter [not shown in Figures] and at least one cutting tool. Further, any type of the cutting mechanism (42) may be selected to be operational based on the type of filler material (10). In an embodiment, the cutting blade (42') and the thermal slicer may be integrated to form a unitary structure as shown in Figure 6. n an embodiment, the cutting blade (42') may be a sharpened and hardened steel blade is mounted on a linear guide rail system to across the deposition end (20b) of the housing (20) and to move perpendicularly across a path of the filler material (10) to facilitate slicing of the filler material (10). This cutting blade (42') is actuated by a cutting actuator (44), which is activated to actuate the cutting mechanism (42) to slice the filler material (10). The cutting actuator (44) may be at least one of a motor, servo slide, but not limited to a linear pneumatic piston to facilitate the movement of the cutting blade (42'). In another embodiment, the thermal slicer may be provided connected to at least one heating unit [not shown in Figures] and the cutting actuator (44) such that the heating unit may be activated to heat the thermal slicer based on the type of filler material (10) to be sliced at a predetermined dimension of the filler material (10). The cutting actuator (44) upon activation may facilitate movement of the thermal slicer for slicing the filler material (10). In an embodiment, the thermal slicer may be a metal heating wire or ceramic filament element, or metal blade or glass that reaches elevated temperatures and when brought in contact with the filler material (10), thermal slicer precisely melts and separates a segment of the filler material (10) without requiring mechanical force. This thermal slicer may be applied for plastic filler material (10), deformable materials under heat or non-metal material and composite materials. In yet another embodiment, the cutting mechanism (42) may be the laser cutter which may be activated by the cutting actuator (44) to slice the filler material (10). This laser cutter may be suitable for non-contact, precision operations, for metal and metal alloys. The laser cutter is operated by emitting a concentrated light beam housed within an optical shield. Further, a motorized mirror and lens system focuses the laser precisely on the cut line, allowing fine and residue-free separation of the filler material (10) to be placed in the print bed (202).

Referring to Figure 5, the system (200) comprises a control unit (50). The control unit (50) is communicatively coupled to the frame (204), the printer head (206) and the slicing unit (100). The control unit (50) is configured to coordinate movement and operation of the frame (204), the printer head (206) and the slicing unit (100) to fabricate the 3D object with integrated support structures. More particularly, the control unit (50) is connected to the displacement mechanism (203), actuators connected to the base (204b), the pair of columns (204a) and the movable gantry (205). The control unit (50) synchronizes and controls the movement of the print bed (202), the pair of columns (204a) of the frame (204) about the base (204b), and the printer head (206), the movable gantry (205). The control unit (50) is also operatively connected to the feeder actuator (32) and the cutting actuator (44) to selectively operate the feeder (31) and the cutting mechanism (42). The system (200) may comprise plurality of sensors (60) provided to each of the frame (204), the print bed (202), slicing unit (100) components such as feeding unit (30), the cutting unit (40), the filler material (10) to detect and measure different parameters required to activate and deactivate during operation of the system (200). The plurality of sensors (60) are operatively coupled to the control unit (50). Based on the detected parameters by the plurality of sensors (60), the control unit may determine and provide necessary signals to activate and deactivate an operation of the frame (204), the print bed (202), slicing unit (100) components such as feeding unit (30), the cutting unit (40). The system (200) control unit (50) is electronically and communicatively coupled to each motor and sensor in the system (200). It processes digital input from the 3D model file, typically in G-code format and translates it into step-by-step instructions for the printer head (206) and the print bed (202) as well. The parameters controlled by the control unit (50) includes controlling a speed, direction, and duration of movement of the pair of columns (204a) print bed (202), moving gantry (205), regulating a temperature of the printer head (206), print bed (202), heating element of the cutting mechanism (42).

In one of the operative configuration, the control unit (50) of the system (200) may continuously process signals from the plurality of sensors (60) placed around the printer head (206). The plurality of sensors (60) of the printer head (206) may be proximity detectors and optical sensors to tactile feedback systems to monitor the position, material readiness, and environmental conditions in real-time. When the sensors detect the need for support structure placement, the control unit (50) initiates a temporary halt of movement of the printer head (206). During this brief interruption, the control unit (50) disengages motor signals to the X, Y, and Z axes, and optionally retracts or lifts the nozzle of the print head (205) to prevent unintended material deposition. The control unit (50) then activates the slicing unit (100) by driving the feeder actuator (32) to push the filler material (10) forward and triggering the cutting actuator (42) to segment the predetermined dimension of the filler material (10) to the desired length. The first set and second set guided rollers (35,26) maintain the material's alignment while the segment of the filler material (10) is cleanly deposited through the deposition end (20b) of the slicing unit (100) onto the targeted location on the print bed (202). Once deposition of filler material (10) is complete, the control unit (50) verifies the operation through a feedback system [not shown] which may include position sensors (60) and actuator encoders. Upon confirmation, the control unit (50) activates the printer head (206) operation, picking up exactly where it left off in the G-code sequence to maintain seamless layer continuity. This coordinated approach allows the system (200) to precisely integrate support structures into complex prints without compromising accuracy, enabling the successful manufacturing of intricate geometries.

The control unit (50) comprises a processor [not specifically shown in Figures] and a memory unit [not shown in Figures] is communicatively coupled to the processor. The processors can be implemented as one or more microprocessors, microcomputers, microcontrollers, digital signal processors, central processing units, state machines, logic circuitries, and/or any devices that manipulate signals based on operational instructions. The memory unit stores processor-executable instructions, which, on execution, causes the processor to receive one or more command signals associated with the user inputs from a user interface unit [not specifically shown in Figures] and inputs signals from the plurality of sensors (60) of the system (200) and the slicing unit (100).

Further, the system (200) includes multiple feedback systems [not shown in Figures] and operatively connected to plurality of sensors (60) and the control unit (50). The control unit (50) may detect position of the cutter mechanism (42), misalignment of feeder (31), or improper print head (206) position triggers alerts and halts further operations to prevent print defects. These operations are adjustable via the user interface, where parameters such as feed speed, actuator pressure, or sensor thresholds can be customized. This responsive interaction between the slicing unit (100) and the system (200) is vital for achieving robust, high-quality 3D prints with integrated support structures.

In an operative configuration, the three-dimensional (3D) printing system (200) is configured to fabricate complex objects with integrated support structures through a coordinated operation of the main components including a printer bed (202), the frame (204), the printer head (206), the slicing unit (100), and a control unit (50). The print bed (202) serves as the primary surface on which the 3D object is formed, while the frame (204) provides structural support and houses the movement mechanism for the printer head. The printer head (206) selectively deposits the primary 3D printing material layer by layer, based on input from the control unit (50). Mounted onto the frame (204) is the slicing unit (100), aids in depositing filler material (10) as a support structure. The slicing unit (100) comprises the housing (20) with the receiving end (20a) is for inserting the filler material (10), and the deposition end (20b) is for placing sliced segments of the filler material (10) onto the print bed (202). Inside the housing (20), the feeding unit (30) is activated for moving the filler material (10). The slicing unit (100) may include one or more feeders (31), driven by feeder actuators (32) that are connected to the control unit (50). Further, the filler material (10) is guided through a rolling unit (34) consisting of the first and second set of guided rollers (35, 36) arranged oppositely within a series of slots (22) in the housing (20). The first and second set of guided rollers (35, 36) rollers are coupled with spring-loaded mechanisms (38) that adjust automatically based on the shape and size variations in the filler material (10). Near the deposition end (20b), the cutting unit (40) is positioned to slice the filler material (10) into predetermined dimensions suitable for use as support structures. This cutting unit (40) having the cutting mechanism (42) may be a mechanical blade, thermal slicer, or laser cutter. The cutting mechanism (42) is activated by the cutting actuator (44) controlled by the central control unit (50). The sliced filler material (10) is then deposited in alignment with the printer head's (206) deposition path. Further, the deposition end (20b) of the slicing unit (100) and that of the printer head (206) are co-linear, allowing seamless coordination between the placement of support material and primary print material of the 3D object. A material delivery unit supplies the 3D printing material to the printer head (206), ensuring continuous and synchronized operation. The control unit (50) aids in managing the movement of the frame (204), the actuation of the feeder (31) and the cutting mechanism (42) within the slicing unit (100), and the extrusion of material from the printer head (206). The control unit (50) is configured to process slicing and deposition instructions, including geometric parameters of the 3D object and required support structures. Through this configuration, the system (200) enables the precise and adaptive deposition of both printing and filler material (10), allowing the fabrication of intricate geometries with minimal manual intervention. The integration of adjustable rollers and synchronized cutting mechanism (42) ensures efficient handling of varying filler material (10), while the coordinated movement between the printer head (206) and slicing unit (100) improves the structural accuracy and quality of 3D printed objects.

The system (200) of the present disclosure is a seamless integration of support material placement during the printing process. This integration of slicing unit (100) aids in generating support structures without traditional use of print head (206) and limits material flexibility and increase printing time. Additionally, by incorporating a dedicated slicing unit (100), the system (200) allows for parallel processing, the printer head (206) can solely work on fabricating the 3D object, while the slicing unit (100) may independently handle the deposition of support structures. This not only reduces total build time but also enables the use of specialized filler material (10) that may differ from the main printing material in terms of properties like removability, and cost-effectiveness. The inclusion of spring-loaded mechanism to the rolling unit (34) allows adjustment based on a size and shape of the filler material (10) thereby facilitating the system (200) to handle a wider range of filler material (10).

The slicing unit (100) comprising the cutting mechanism (42) ensures that the filler material (10) as support structure is sliced to exact dimensions, based on design parameters received from the control unit (50). The co-linear alignment of the slicing unit's (100) deposition end and the printer head (206) ensures perfect spatial coordination, which minimizes print defects and reduces post-processing work. The modular design of the slicing unit (100) provides ease of serviceable and upgradable, which is valuable in dynamic manufacturing environments where materials and requirements may evolve over time.

It is intended that the disclosure and examples be considered as exemplary only, with a true scope of disclosed embodiments being indicated by the following claims.

## Claims

1. A three-dimensional (3D) printing system (200), comprising:
a print bed (202) providing a surface for fabricating a 3D object;
a frame (204), operatively coupled to the print bed (202), configured to support and control movement of a printer head (206), wherein the printer head (206) is adapted to selectively deposit a 3D printing material to form the 3D object on the print bed (202);
a slicing unit (100), mounted to the frame (204), configured to receive and place a filler material (10) on to the print bed (202) as a support structure for fabricating the 3D object, wherein the slicing unit (100) comprises:
a housing (20), having:
a receiving end (20a) for receiving the filler material (10); and
a deposition end (20b), configured to place the filler material (10) on to the print bed (202);
a feeding unit (30), disposed within the housing (20), configured to move the filler material (10) between the receiving end (20a) and the deposition end (20b);
a cutting unit (40), arranged within the housing (20) and proximal to the deposition end (20b), configured to slice the filler material (10) in to predetermined dimension based on parameters of the support structure; and
a control unit (50), communicatively coupled to the frame (204), the printer head (206) and the slicing unit (100), configured to coordinate movement and operation of the frame (204), the printer head (206) and the slicing unit (100) to fabricate the 3D object with integrated support structures.

2. The system (200) as claimed in claim 1, wherein the feeding unit (30) comprises:
at least one feeder actuator (32) coupled to at least one feeder (31), wherein the feeder actuator (32) is operatively coupled to the control unit (50), configured to move the filler material (10) between the receiving end (20a) and the deposition end (20b);
at least one rolling unit (34) to support and facilitate movement of the filler material (10); and
at least one adjustable spring-loaded mechanism (38), operatively coupled to the at least one rolling unit (34), configured to adjust the at least one rolling unit (34) based on variations in shape and size of the filler material (10).

3. The system (200) as claimed in claim 2, wherein the at least one rolling unit (34) comprises
a first set of guided rollers (35), arranged within the plurality of slots (22) defined on the housing (20); and
a second set of guided rollers (36), arranged within the plurality of slots (22), wherein the second set of guided rollers (36) is configured opposite to the first set of guided rollers (35),
wherein each of the first set of guided rollers (35), and the second set of guided rollers (36) are coupled together with the at least one adjustable spring-loaded mechanism (38).

4. The system (200) as claimed in claim 1, wherein the cutting unit (40) comprises:
a cutting mechanism (42), configured to slice the filler material (10); and
a cutting actuator (44), operatively coupled to the control unit (50), configured to actuate the cutting mechanism (42) to slice the filler material (10).

5. The system (200) as claimed in claim 1, wherein the cutting mechanism (42) comprises at least one of a cutting blade (42'), a thermal slicer or a laser cutter and at least one cutting tool, wherein the cutting mechanism (42) is selected based on a type of filler material (10).

6. The system (200) as claimed in claim 1, comprises a material delivery unit communicatively coupled to the printer head (206), configured to supply the 3D printing material.

7. The system (200) as claimed in claim 1, wherein the deposition end (20b) and a deposition end of the printer head (206) is aligned to be co-linear to maintain an alignment of a 3D printed layer.

8. A slicing unit (100) for a three-dimensional (3D) printing system (200), comprising:
a housing (20), having:
a receiving end (20a) for receiving a filler material (10); and
a deposition end (20b), configured to place the filler material (10) on to a print bed (202);
a feeding unit (30), disposed within the housing (20), configured to move the filler material (10) between the receiving end (20a) and the deposition end (20b);
a cutting unit (40), arranged within the housing (20) at the deposition end (20b), configured to slice the filler material (10) in to predetermined dimension for placing the filler material (10) on to the print bed (202) as a support structure for fabricating a 3D object.

9. The slicing unit (100) as claimed in claim 8, wherein the feeding unit (30) comprises:
at least one feeder actuator (32) coupled to at least one feeder (31), wherein the feeder actuator (32) is operatively coupled to the control unit (50), configured to move the filler material (10) between the receiving end (20a) and the deposition end (20b);
at least one rolling unit (34) to support and facilitate movement of the filler material (10); wherein the rolling unit (34) comprises;
a first set of guided rollers (35), arranged within the plurality of slots (22); and
a second set of guided rollers (36), arranged within the plurality of slots (22), wherein the second set of guided rollers (36) is configured to opposite to the first set of guided rollers (35),
wherein each of the first set of guided rollers (35), and the second set of guided rollers (36) are coupled together with the at least one adjustable spring-loaded mechanism (38); and
at least one adjustable spring-loaded mechanism (38), operatively coupled to the at least one rolling unit (34), configured to adjust the at least one rolling unit (34) based on variations in shape and size of the filler material (10).

10. The slicing unit (100) as claimed in claim 9, wherein the cutting unit (40) comprises:
a cutting mechanism (42), configured to slice the filler material (10); and
a cutting actuator (44), operatively coupled to a control unit (50), configured to actuate the cutting mechanism (42) to slice the filler material (10).
